# FASCICULE DE BREVET EUROPEEN

(11) **EP 0 495 741 B1**
(45) Date de publication et mention de la délivrance du brevet: **06.12.1995**
(21) Numéro de dépôt: 92460003.4
(22) Date de dépôt: 16.01.1992
(51) Int. Cl.: G07C 1/30, G07B 15/02, G07F 7/08

(54) **Système de comptabilisation d'unités consommables, à gestion optimisée, notamment pour la comptabilisation d'unités de durée de stationnement**
System zur Verbuchung von Verbrauchseinheiten, mit optimierter Verwaltung, besonders zur Verbuchung von Zeiteinheiten beim Parken
System for accounting consumable units, with optimized management, especially for accounting parking time units

(30) Priorité: 17.01.1991 FR 9100655
(43) Date de publication de la demande: 22.07.1992
(73) Titulaire: HELLO S.A., F-75002 Paris (FR)
(72) Inventeur: Ilie, François, F-75011 Paris (FR); Marechal, Alain, F-75004 Paris (FR)
(74) Mandataire: Dupuis-Latour, Dominique

(56) Documents cités:
- EP-A- 0 193 635
- EP-A- 0 197 883
- EP-A- 0 402 821
- WO-A-88/09022
- US-A- 4 443 027

## Description

La présente invention concerne un système de comptabilisation du temps à gestion optimisée.

Elle s'applique en particulier à la comptabilisation de durées de stationnement payant, ou réglementé.

Cette application n'est cependant pas limitative, et l'invention peut être appliquée de façon générale chaque fois qu'il y a lieu de comptabiliser une durée par consommation progressive, au fur et à mesure de l'écoulement du temps, d'un crédit d'unités de stationnement préalablement alloué à un usager.

On entend par système de comptabilisation d'unités de durée de stationnement, un appareil constitué par exemple par un boîtier, préférentiellement portable, destiné à être posé derrière le pare-brise d'un véhicule et coopérant avec un ticket électronique prépayé, par exemple une carte à mémoire, pour décrémenter des unités de taxe mémorisées sur la carte, en fonction de la zone et de la durée du stationnement. Ce type de dispositif permet de s'affranchir de l'utilisation de bornes fixes individuelles (du type parcmètre de trottoir) ou collectives (du type horodateur). L'utilisateur acquitte automatiquement des taxes de stationnement par introduction d'une carte à mémoire prépayée dans son boîtier. Les boîtiers sont généralement vendus, prêtés ou loués par des collectivités locales ou leurs mandataires, qui commercialisent des unités de stationnement, sous forme de cartes d'un type différent pour chaque aire de validité distincte, en l'occurence pour chaque collectivité locale. La régularité du stationnement peut être vérifiée grâce à un afficheur sur lequel apparaissent les diverses informations nécessaires au personnel de contrôle, par exemple le numéro de zone de stationnement sélectionné par l'utilisateur, un code identifiant notamment le type de carte introduite par l'utilisateur dans le boîtier et représentatif de la ville de stationnement, et le cas échéant une information indicative d'une situation d'infraction, et le nombre d'unités de taxes encore disponibles sur la carte. Les mémoires des cartes peuvent être réinscriptibles ou inscrites irréversiblement.

Un tel dispositif est par exemple décrit dans le WO-A-88/09022.

Le dispositif décrit dans ce document est un boîtier destiné à recevoir des cartes à mémoire contenant des crédits d'unités de stationnement. Le boîtier comprend des moyens de couplage électrique avec chaque carte qui y est introduite, et un circuit d'écriture. Ce circuit d'écriture permet l'inscription irréversible d'une position mémoire électronique de la carte introduite dans le boîtier, ce circuit étant périodiquement déclenché sous contrôle d'un circuit d'horloge de sorte que les inscriptions successives des positions mémoire de la carte introduites dans le boîtier correspondent à la consommation progressive, au fur et à mesure de l'écoulement du temps, du crédit d'unités de stationnement subsistant dans la carte.

Ce dispositif antérieur comprend en outre des moyens de mémorisation temporaire d'unités de stationnement, situés dans le boîtier. Il est prévu que ces moyens de mémorisation temporaire peuvent recueillir un solde d'unités de stationnement contenu initialement dans une carte. Ceci correspond par exemple au cas où l'usager estime ne pas posséder suffisamment d'unités de stationnement dans une première carte, et décide de vider le contenu de celle-ci dans la mémoire temporaire du boîtier, de façon à insérer une seconde carte dans le boîtier et augmenter ainsi le crédit d'unités de stationnement disponible, en automatique, dans le système.

Dans une variante, on peut également prévoir que le contenu de toute carte introduite dans le boîtier se vide dans la mémoire temporaire du boîtier, lorsque le contenu de ladite carte est inférieur à un nombre d'unités prédéterminé.

Ce document prévoit également que le système puisse être utilisé dans plusieurs villes, en consommant des unités contenues dans une carte unique. La carte est achetée dans une des villes et le système mémorise chacun des stationnements successifs. Un système de compensation régulière permet de répartir les sommes provenant de la vente de la carte entre les différentes villes en fonction de l'utilisation réelle de la carte vendue, par exemple en fonction du nombre total d'heures de stationnement dans chaque ville.

Ce système antérieur présente toutefois un certain nombre d'inconvénients.

D'une part, ce système antérieur propose une gestion relativement complexe, dans le cas d'une utilisation dans plusieurs villes ou zones.

En outre, il ne résoud pas le cas où les conditions d'utilisation conduisent à la consommation de fractions d'unités de stationnement.

L'invention vise à pallier ces inconvénients.

Plus précisément, l'invention se donne pour objectif de prévoir qu'une carte donnée ne puisse être utilisée que dans une ville, et plus généralement une aire de validité donnée, et que la gestion des soldes de cartes et des fractions d'unités non consommées soit assurée indépendamment pour chaque aire de validité, dans un même boîtier.

Un autre objectif de l'invention est de permettre la récupération et le cumul, pour une utilisation ultérieure, de fractions d'unités de stationnement consommées.

Ces objectifs, ainsi que d'autres qui apparaîtront par la suite, sont atteints à l'aide d'un système de comptabilisation d'unités consommables du type général énoncé par le préambule de la revendication 1, correspondant au WO-A-88/09022 précité, et pourvu des moyens énoncés par la partie caractérisante de cette revendication 1.

D'autres caractéristiques et avantages de l'invention apparaîtront à la lecture de la description suivante d'un mode de réalisation préférentiel de l'invention, donné à titre illustratif et non limitatif, et des dessins annexés dans lesquels :
- la figure 1 est un schéma bloc illustrant les principaux modules fonctionnels d'un système suivant l'invention;
- la figure 2 est un organigramme présentant une succession d'étapes de fonctionnement pour un système selon l'invention.
- la figure 3 schématise la partition d'une portion de la mémoire EEPROM du système de la figure 1 en compartiments de stockage d'unités et fractions d'unités de stationnement (porte-monnaie), pour 8 villes distinctes.

Le mode de réalisation décrit ci-après correspond à un boîtier coopérant avec des cartes à microcircuit, et destiné à former un parcmètre portable.

Le système selon la présente invention utilise une électronique 10 préférentiellement embarquée dans un boîtier portable coopérant avec un élément 25 à unités de crédit consommables. L'électronique 10 comprend un microcontrôleur 11 intégrant une mémoire non permanente 12, une mémoire permanente 13 et une mémoire permanente électriquement effaçable 14. Le microcontrôleur 11 est par exemple un circuit de la famille MOTOROLA (marque déposée) 6805. La RAM 12 sert à mémoriser des paramètres de calcul pendant le fonctionnement du dispositif, la ROM 13 à mémoriser des données confidentielles du type algorithme de calcul et l'EEPROM 14 à mémoriser notamment des unités et fractions d'unités de stationnement, comme il sera expliqué par la suite. L'EEPROM 14 peut également, entre autres, mémoriser des données servant à modifier la fréquence d'oscillation d'un quartz 21, à définir des valeurs de consigne pour la génération de tensions spécifiques (alimentation de l'élément 25), ou des données concernant une clé secrète ou un contrôle du fonctionnement récent du système (voir par exemple les demandes de brevet 90 16253 et 90 16254 au nom du même déposant, publiées sous les n^{os} FR-A-2 670 932 et FR-A-2 670 933 le 26.06.92, et faisant l'objet des demandes européennes 91 460058.0 et 91 460057.2, publiées sous les n^{os} EP-A-0 493 289 et EP-A-0 493 288 le 01.07.92, respectivement.

L'EEPROM 14 a, selon un mode de réalisation spécifique, une taille de 256 octets.

Le microcontrôleur 11 dialogue avec un circuit intégré spécifique à une application (ASIC) à travers cinq lignes 17. L'ASIC 18 est par exemple du type FULL CUSTOM. La ligne INT envoie au microcontrôleur 11 une information d'interruption correspondant à l'introduction ou au retrait de l'élément 25 dans le dispositif 10 (réveil du microcontrôleur). De plus, une interruption est générée toutes les minutes, l'unité de temps étant la minute, ou généré lorsque l'élément 25 actionne l'interrupteur de fin de course 20 de l'élément 25 dans le boîtier. Les deux lignes DATA et SCL véhiculent les informations échangées entre les deux circuits. La ligne RST est une ligne de remise à l'état initial du microcontrôleur 11 et la ligne CLK véhicule le signal d'horloge pour le microcontrôleur 11. De plus, l'ASIC est équipée d'une horloge-temps réel pilotée par le quartz 21 raccordé à l'ASIC 18. Le quartz 21 oscille avantageusement à 32 kHz.

L'ASIC 18 effectue également une gestion de moyens d'affichage 19, par exemple constitués par un écran à cristaux liquides. L'écran 19 permet notamment l'affichage de l'heure courante (heure et minutes), de l'heure limite de stationnement autorisée, du nombre d'unités de crédit de paiement disponibles sur l'élément 25 et de la zone de stationnement. La zone de stationnement peut être modifiée par l'utilisateur par actionnement des touches 15 et 16 figurant préférentiellement sur le dessus du boîtier renfermant l'électronique 10. Le choix d'une zone de stationnement plutôt qu'une autre permet de modifier le nombre d'unités consommables débitées de l'élément 25 et donc d'adapter le système de paiement à différentes zones ayant des prix de stationnement horaire différents. Selon un mode de réalisation, l'utilisateur a le choix entre différentes zones affichées sous la forme de nombres hexadécimaux.

L'ASIC 18 fournit une alimentation à un module 22 élévateur de tension fournissant une tension Vcc et une tension Vpp à l'élément 25, nécessaires à son fonctionnement. L'alimentation du système complet est assurée par des moyens d'alimentation 26, avantageusement constitués par un jeu de piles pour permettre la portabilité du boîtier. Les tensions 23 sont fournies à l'élément 25 par rapport à une masse commune. Cinq lignes de communication 24 relient le microcontrôleur 11 à l'élément 25. L'élément 25 a avantageusement la forme d'une carte de crédit et comporte un port d'entrée-sortie et une mémoire du type PROM mémorisant un nombre d'unités de taxe, consommables préférentiellement de façon irréversible.

Les touches 15 et 16 permettent à l'utilisateur de régler l'heure et la date courantes en appuyant simultanément sur les deux touches 15 et 16 lorsqu'il introduit une carte 25 dans le boîtier, pour commander une remise à jour de l'heure et de la date. L'écran 19 affiche alors successivement, par intervalles de 4 secondes, I'année, puis le mois, puis le jour de la semaine et le quantième, puis l'heure et enfin les minutes. Il suffit d'appuyer sur une des deux touches 15 et 16 pour incrémenter ou décrémenter la donnée affichée. Le dispositif peut avantageusement tenir compte du passage aux heures d'été et d'hiver.

Selon l'invention, l'EEPROM 14 permet de mémoriser des "porte-monnaie" attribués chacun à une ville émettrice de cartes de stationnement. Ces porte-monnaie peuvent jouer au moins l'une des fonctions suivantes :
- ils stockent la monnaie résultant des consommations d'unités de stationnement, lors des opérations de stationnement,
- ils permettent de recueillir les "fonds" de cartes de stationnement, c'est-à-dire les quelques unités restantes lorsque la carte est pratiquement totalement consommée, de façon à faciliter le changement d'une carte à l'autre.

En outre, pour éviter les fraudes, ces porte-monnaie, formant mémoire électronique annexe, présentent deux caractéristiques :
- ils sont de capacité limitée, (par exemple sept unités de stationnement), et ne peuvent donc recueillir des "fonds" de cartes que lorsque celles-ci sont véritablement pratiquement totalement consommées ;
- le système consomme prioritairement les unités et fractions d'unités stockées dans le porte-monnaie, avant de consommer celles contenues dans la carte.

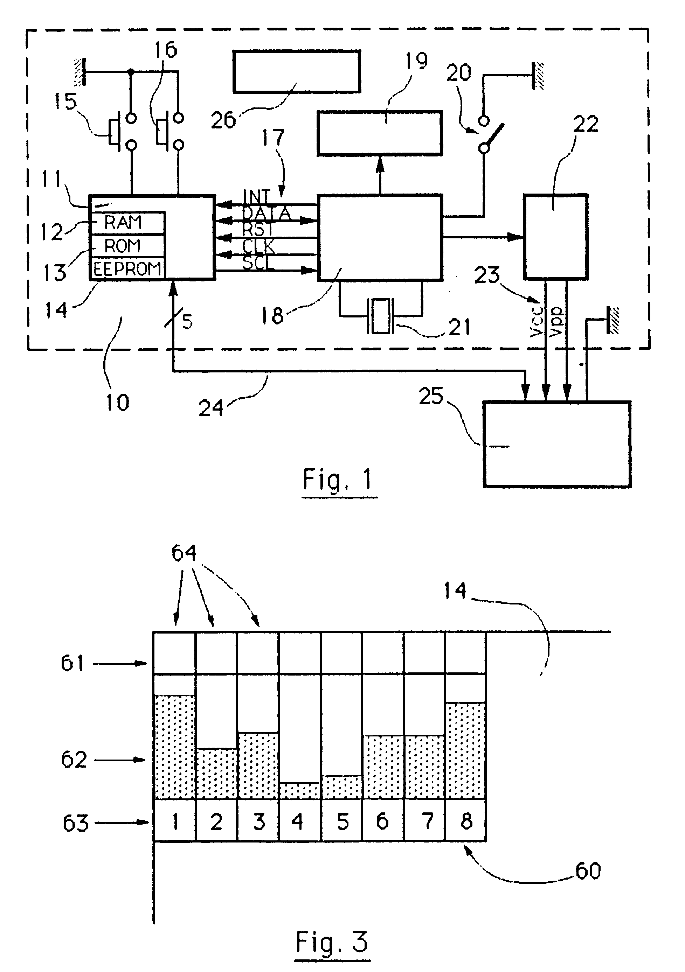

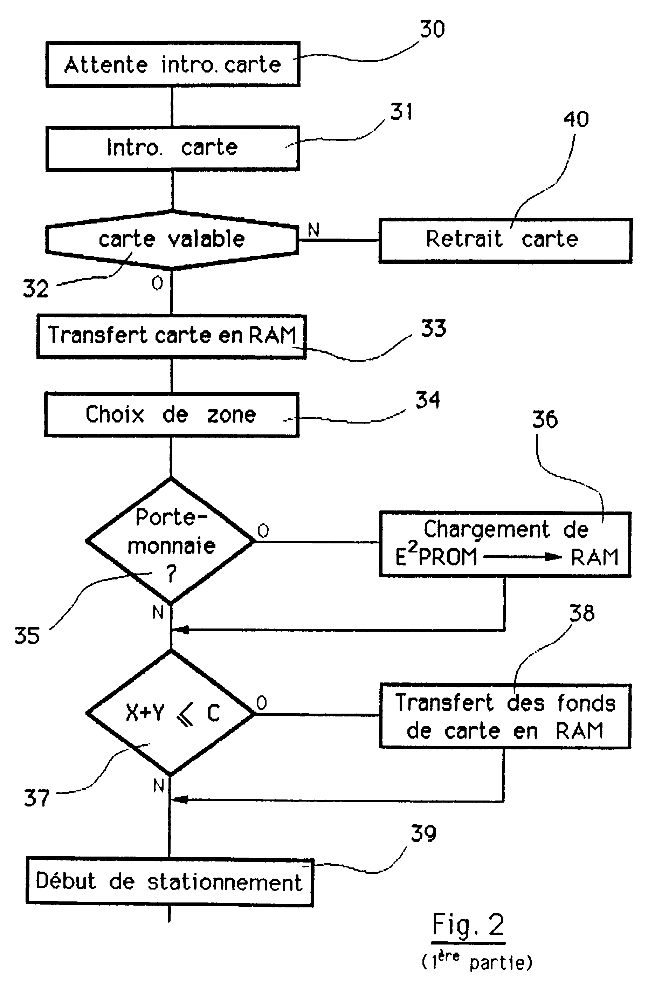

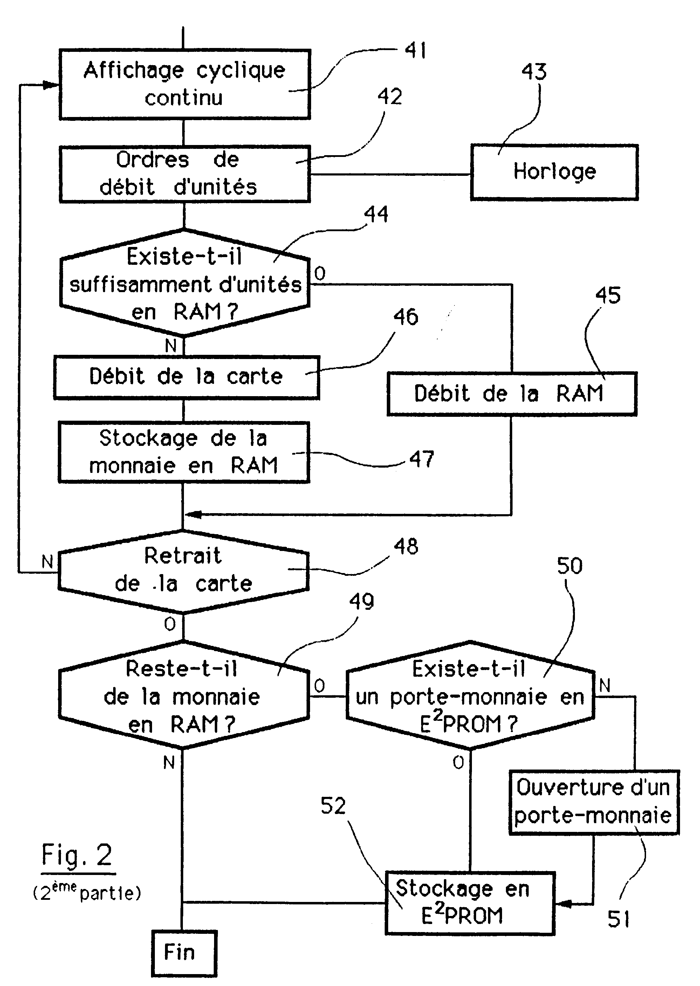

La figure 2 est un organigramme représentant le fonctionnement du système de comptabilisation d'unités de stationnement de la figure 1, relativement aux caractéristiques de l'invention.

Dans la séquence des étapes de fonctionnement, l'appareil commence par être à l'état de veille (30), en attente de l'introduction d'une carte. Lorsqu'une carte est introduite (étape 31), il teste la validité de la carte (étape 32), et émet une demande de retrait (étape 40) apparaissant sur les moyens d'affichage 19, lorsque le boîtier ne reconnait pas la carte introduite.

Si la carte est reconnue, son contenu est recopié dans la RAM 12 (étape 33), pour limiter le nombre d'opérations d'accès à la carte. Le contenu de la carte transférée comprend par exemple notamment le code de la ville qui l'a émise, les zones de stationnement de la ville dans lesquelles la carte est utilisable accompagnées de leur description horaire et tarifaire, divers codes et données, et le crédit d'unités de durée de stationnement.

A l'étape 34, l'utilisateur établi un dialogue avec le boîtier, notamment par l'intermédiaire des touches 15, 16, pour définir notamment la zone dans laquelle il stationne.

L'appareil effectue ensuite deux opérations automatiques :
- il vérifie (35) s'il existe dans l'EEPROM 14 un "porte-monnaie" pour la ville de stationnement, c'est-à-dire celle qui a émis la carte introduite dans le boîtier. Si tel est le cas, l'appareil charge (36) le contenu de l'EEPROM 14 dans la RAM 12, de façon à permettre l'utilisation ultérieure des unités contenues dans le porte-monnaie ;
- l'appareil vérifie (37) si le cumul du contenu du porte-monnaie de la ville, avec le contenu de la carte introduite dans le boîtier, est inférieur à la capacité maximale du porte-monnaie. Si tel est le cas, l'appareil transfère (38) le contenu de la carte dans la RAM, en le cumulant avec le contenu du porte-monnaie, et signale à l'utilisateur qu'il a vidé la carte et que celle-ci peut être remplacée par une nouvelle carte.

L'appareil est alors disponible pour entrer en début de stationnement 39.

Ces différentes étapes de la phase d'initialisation peuvent également être interverties, sans sortir du cadre de l'invention.

On notera que la capacité du porte-monnaie attribué à chaque ville est limitée volontairement à un nombre prédéterminé d'unités de stationnement. Ce nombre est préférentiellement un nombre faible, par exemple sept unités.

En conséquence, il ne pourra y avoir transfert du solde de crédit contenu dans la carte introduite dans le boîtier que si le total des unités du porte-monnaie figurant en RAM est inférieur à la capacité maximale autorisée. Le montant du solde transférable est donc d'autant réduit qu'il existe déjà des unités dans le porte-monnaie, par exemple résultant d'une utilisation antérieure du boîtier dans la même ville.

Bien entendu, si le porte-monnaie de la ville est vide, ou encore s'il n'existe aucun porte-monnaie pour cette ville, le seuil de transfert du contenu de la carte est identique à la capacité maximale du porte-monnaie.

En phase de stationnement, l'afficheur 19 fournit par exemple en continu un affichage cyclique 41. Sont par exemple affichés cycliquement l'heure courante, l'heure de début de stationnement, l'heure limite de stationnement autorisée pour la zone considérée, le nombre d'unités de crédit de paiement disponibles sur l'élément 25, et la zone de stationnement sélectionnée. Ces informations permettent un contrôle de la régularité du stationnement, tant pour l'utilisateur que pour les agents de verbalisation.

De façon périodique, le système reçoit des ordres 42 de débit d'unités de stationnement, sous contrôle 43 de l'horloge pilotée par le quartz 21.

Ces ordres de débit sont exécutés en fonction de la politique de stationnement pour la ville considérée, qui a été fournie à la RAM 12 du micro-contrôleur 11 lors de l'introduction de la carte (étape 33).

A titre d'exemple, pendant le stationnement effectif du véhicule, l'ASIC 18 réveille le micro-contrôleur 11 toutes les minutes pour qu'il applique la politique de stationnement.

A chaque ordre de débit d'unités, l'appareil vérifie prioritairement si le porte-monnaie attribué à la ville, et chargé en RAM 12, contient suffisamment d'unités pour réaliser l'ordre de débit (étape 44). Si tel est le cas, le débit est donc effectué (45) directement dans la RAM 12, sans accéder à la carte 25.

Dans le cas contraire, le boîtier commande directement de débiter (46) des positions mémoire dans la carte 25.

Le cas échéant, dans une variante de l'invention, le micro-contrôleur 11 peut systématiquement consommer la totalité du contenu du porte-monnaie de la ville, puis débiter le complément nécessaire dans la carte 25.

Une caractéristique de l'invention est qu'elle permet de gérer des fractions d'unités de stationnement.

Cette possibilité s'avère intéressante dans le cas suivant : une unité peut par exemple être achetée un franc par l'usager ; il paie donc cinquante francs une carte de cinquante unités. Imaginons que la politique de stationnement de la ville prévoit une facturation de sept francs par heure. Si l'usager stationne pendant une demi-heure, il devrait donc être facturé trois francs cinquante. Or, sans système spécifique, il n'est pas possible de prendre en compte des demi-unités de stationnement.

Cet inconvénient peut être résolu, grâce à l'invention, en prévoyant de gérer les fractions d'unités de stationnement dans le porte-monnaie de la ville. Avantageusement, ce porte-monnaie est en effet capable de prendre en compte par exemple des 1/256 unités de stationnement.

Dans ce cas, après débit (46) de la carte, il y a possibilité de stockage (47) de monnaie résiduelle dans le porte-monnaie. Cette monnaie viendra s'ajouter aux unités ou fractions d'unités éventuellement déjà présentes, de façon à en grossir le contenu.

La consommation des unités de stationnement est effectuée périodiquement, tant que l'appareil ne constate pas de retrait (48) de la carte hors du boîtier.

En cas de retrait, l'appareil vérifie tout d'abord s'il reste de la monnaie dans le porte-monnaie en RAM 12 (étape 49).

Si tel est le cas, il vérifie ensuite si un porte-monnaie est présent dans l'EEPROM 14 pour la ville considérée (étape 50).

Si tel est le cas, le montant du porte-monnaie est inscrit dans l'EEPROM, à la place de l'ancien montant (étape 52).

En revanche, si aucun porte-monnaie n'a été créé pour la ville considérée dans l'EEPROM, l'appareil va procéder à une opération d'ouverture de porte-monnaie (51).

L'EEPROM étant de capacité limitée, le système de l'invention réserve avantageusement un nombre limité de compartiments dans l'EEPROM, destinés chacun à recevoir un porte-monnaie pour une ville distincte.

La figure 3 schématise la partition d'une portion 60 de la mémoire EEPROM 14 du système de la figure 1, formant mémoire de stockage d'unités de stationnement, en compartiments 64 de stockage d'unités et fractions d'unités (porte-monnaie), pour 8 villes distinctes. Plus précisément, chaque compartiment 64 comprend:
- un identifiant 61 de la ville (aire de validité) pour laquelle a été réservé le compartiment;
- un emplacement 62 de stockage des unités et fractions d'unités de stationnement sauvegardées (représentées schématiquement par un "niveau de remplissage");
- un indicateur de "jeunesse" 63 du compartiment, dont la fonction sera détaillée plus loin.

Lorsqu'un stationnement est initialisé pour une ville possédant un "porte-monnaie" 64 dans l'EEPROM 14, le contenu de l'emplacement 62 est dupliqué en RAM 12 (étape 36 de la figure 2), et sert de mémoire annexe à capacité limitée pour la gestion du débit de carte et de l'utilisation de fractions d'unités.

Le fait qu'il existe un nombre limité de compartiments suppose de gérer le cas limite où, lors du retrait d'une carte, le système demande l'ouverture d'un nouveau compartiment alors que tous les compartiments contiennent déjà des porte-monnaie attribués.

Ceci suppose donc l'élimination d'un porte-monnaie, de façon à libérer un compartiment.

L'invention inclut tous les modes de réalisation permettant de choisir le compartiment à libérer.

Avantageusement, l'élimination pourra être effectuée en prenant en compte au moins l'un des critères suivants :
- ancienneté d'ouverture du porte-monnaie,
- fréquence d'utilisation du porte-monnaie, c'est-à-dire fréquence de recopie du porte-monnaie depuis l'EEPROM dans la RAM, et inversement,
- contenu du porte-monnaie, de façon à éliminer le porte-monnaie qui présente le solde le plus faible, voire un solde nul.

Avantageusement, cette prise en compte des différents critères est assurée par une gestion dans l'EEPROM d'indicateurs de "jeunesse" de transaction associés chacun à un compartiment distinct. Ces indicateurs sont par exemple simplement constitués d'un chiffre de 1 à 8, d'autant plus faible que la transaction est ancienne par rapport aux autres. Ainsi, si l'on imagine que l'on a réservé huit compartiments dans l'EEPROM pour le stockage des porte-monnaie, on peut fonctionner de la manière suivante à chaque retrait de carte :
- si il n'existait pas de porte-monnaie pour la ville considérée, on élimine le porte-monnaie de la ville la plus anciennement utilisée, et on "vieillit" tous les indicateurs (par exemple par décrémentation) de façon à affecter au nouveau porte-monnaie l'indicateur le plus jeune,
- s'il existait déjà un porte-monnaie en EEPROM pour la ville correspondant à la carte qui vient d'être retirée du boîtier, on affecte l'indicateur le plus jeune à ce porte-monnaie, et on "vieillit" le cas échéant les indicateurs des autres porte-monnaie. Plus précisément :
- aucun indicateur ne sera "vieilli" si le porte-monnaie était déjà en position "le plus jeune" avant le stationnement qui vient de s'achever,
- dans les autres cas, seuls seront "vieillis" les indicateurs "plus jeunes" c'est-à-dire ceux dont la valeur de l'indicateur de jeunesse se situe entre l'ancienne et la nouvelle valeur du porte-monnaie déplacé.

Cette logique d'arbitrage correspond en quelque sorte au fonctionnement d'une mémoire FIFO "intelligente".

Afin d'optimiser encore le système, il est possible de supprimer de la mémoire tout porte-monnaie qui serait vide, par exemple en ne rechargeant pas en EEPROM 14 le porte-monnaie vidé, lors du retrait de la carte correspondante.

## Revendications

1. Système de comptabilisation d'unités consommables, notamment pour la comptabilisation d'unités de durée de stationnement, du type comprenant :
- une carte (25) ou élément consommable comprenant une mémoire électronique stockant un crédit d'unités de stationnement consommables, et
- un boîtier (10) de réception de ladite carte (25), comprenant d'une part des moyens (11) d'inscription irréversible des positions mémoire de la mémoire électronique de ladite carte (25), et d'autre part une mémoire de gestion (60), ayant une capacité de stockage limitée à un nombre maximal d'unités de stationnement prédéterminé et susceptible de recueillir des unités de stationnement consommables par lesdits moyens d'écriture, ainsi que des moyens de transfert assurent le transfert du solde d'unités de stationnement contenues dans la carte (25) vers ladite mémoire de gestion (60) du boîtier lorsque le total arithmétique du nombre d'unités cumulées dudit solde de carte et du contenu courant de ladite mémoire de gestion (60) du boîtier est inférieur ou égal à ladite capacité de la mémoire de gestion (60),
caractérisé en ce que, pour permettre au boîtier de fonctionner indistinctement pour différentes aires de validité, la mémoire de gestion (60) comporte un nombre prédéterminé de compartiments (64) distincts pour le stockage des unités de stationnement relatives à un fonctionnement pour une aire de validité correspondante.

2. Système selon la revendication 1, caractérisé en ce que ledit circuit d'écriture réalise ladite consommation d'unités de stationnement en fonction de paramètres préconfigurables, susceptibles de prescrire en outre la consommation de fractions d'unités de stationnement consommables, et en ce que les fractions d'unités de stationnement non consommées sont stockées dans ladite mémoire de gestion (60).

3. Système selon l'une des revendications 1 et 2, caractérisé en ce que lesdits moyens (11) d'inscription du boîtier (10) consomment prioritairement les unités et/ou fractions d'unités de stationnement contenues dans ladite mémoire de gestion (60), avant de consommer les unités de stationnement contenues dans ladite carte.

4. Système selon la revendication 2, caractérisé en ce que lesdits paramètres préconfigurables appartiennent au groupe comprenant l'écoulement du temps, une aire de validité de la carte, une zone donnée parmi plusieurs zones découpées dans ladite aire de validité de la carte.

5. Système selon la revendication 4, caractérisé en ce que lesdits paramètres préconfigurables comprennent des données figées dans la carte, des données figées dans le boîtier et des données programmables par l'usager.

6. Système selon la revendication 1, caractérisé en ce qu'il comprend au moins autant de types de cartes distincts que d'aires de validité distinctes et en ce que chaque carte contient un code représentatif de son aire de validité.

7. Système selon l'une des revendications 1 et 2, caractérisé en ce que ladite mémoire de gestion (60) à compartiments (64) est constituée en FIFO, de façon que lorsque le nombre d'aires de validité pour lesquelles des unités de stationnement et/ou fractions d'unités sont à stocker excède le nombre de compartiments (64), les moyens d'inscription (11) suppriment de ladite mémoire (60) les unités et/ou fractions d'unités de stationnement du compartiment (64) correspondant à l'aire de validité qui :
- est la plus anciennement présente dans la mémoire du boîtier et/ou
- comprend le plus faible nombre d'unités mémorisées et/ou
- possède la plus faible fréquence d'utilisation.

8. Système selon la revendication 7, caractérisé en ce que chacun desdits compartiments (64) est repéré par un indicateur de "jeunesse" (63) mémorisé dans la mémoire de gestion (60), la valeur de l'indicateur (63) étant représentative de l'ancienneté de la dernière utilisation du compartiment (64) relativement aux autres compartiments (64) et en ce que, en cas de surnombre, les moyens d'inscription (11) suppriment le compartiment (64) affecté de l'indicateur (63) représentatif de la plus grande ancienneté.

## Patentansprüche

1. System zur Verbuchung von Verbrauchseinheiten, insbesondere zur Verbuchung von Zeiteinheiten beim Parken, das aufweist:
- eine Karte (25) oder ein verbrauchbares Element, das einen elektronischen Speicher aufweist, der ein Guthaben von verbrauchbaren Parkeinheiten speichert, und
- ein Gehäuse (10) zur Aufnahme der Karte (25), das zum einen Einrichtungen (11) zum irreversiblen Beschreiben der Speicherpositionen des elektronischen Speichers der Karte (25) und zum anderen einen Verwaltungsspeicher (60) aufweist, der eine Speicherkapazität hat, die auf eine vorbestimmte maximale Anzahl von Parkeinheiten beschränkt ist und in der Lage ist, verbrauchbare Parkeinheiten durch die Schreibeinrichtungen zu sammeln, sowie Übertragungseinrichtungen, die die Übertragung der Bilanzsumme der Parkeinheiten zu dem Verwaltungsspeicher (60) des Gehäuses gewährleisten, die in der Karte (25) enthalten sind, wenn die arithmetische Gesamtsumme der angesammelten Einheiten der Bilanzsumme der Karte und des derzeitigen Inhalts des Verwaltungsspeichers (60) des Gehäuses kleiner oder gleich der Kapazität des Verwaltungsspeichers (60) ist,
dadurch gekennzeichnet, daß, um zu ermöglichen, daß das Gehäuse unterschiedslos für unterschiedliche Gültigkeitsbereiche funktioniert, der Verwaltungsspeicher (60) eine vorbestimmte Anzahl von unterschiedlichen Abteilen (64) für die Speicherung von Parkeinheiten bezüglich einem Funktionieren für einen entsprechenden Gültigkeitsbereich aufweist.

2. System gemäß Anspruch 1, dadurch gekennzeichnet, daß die Schreibschaltung den Verbrauch der Parkeinheiten in Abhängigkeit von vorkonfigurierbaren Parametern realisiert, die in der Lage sind, unter anderem den Verbrauch von Bruchteilen von verbrauchbaren Parkeinheiten vorzuschreiben, und dadurch, daß die Bruchteile der nicht verbrauchten Parkeinheiten in dem Verwaltungsspeicher (60) gespeichert sind.

3. System gemäß einem der Ansprüche 1 oder 2, dadurch gekennzeichnet, daß die Schreibeinrichtungen (11) des Gehäuses (10) prioritär die Parkeinheiten und/oder Bruchteile von Parkeinheiten verbrauchen, die in dem Verwaltungsspeicher (60) enthalten sind, bevor sie die Parkeinheiten verbrauchen, die in der Karte enthalten sind.

4. System gemäß Anspruch 2, dadurch gekennzeichnet, daß die vorkonfigurierbaren Parameter zu einer Gruppe gehören, die den Zeitablauf, einen Gültigkeitsbereich der Karte, und eine Zone, die unter mehreren Zonen bestimmt ist, in die der Gültigkeitsbereich unterteilt ist, aufweist.

5. System gemäß Anspruch 4, dadurch gekennzeichnet, daß die vorkonfigurierbaren Parameter Daten aufweisen, die fest in der Karte enthalten sind, Daten, die fest in dem Gehäuse enthalten sind, und Daten, die durch den Benutzer programmierbar sind.

6. System gemäß Anspruch 1, dadurch gekennzeichnet, daß es zumindest so viele unterschiedliche Typen von Karten wie unterschiedliche Gültigkeitsbereiche aufweist, und dadurch, daß jede Karte einen Code enthält, der repräsentativ für ihren Gültigkeitsbereich ist.

7. System gemäß einem der Ansprüche 1 und 2, dadurch gekennzeichnet, daß der Verwaltungsspeicher (60) mit Abteilen (64) nach dem FIFO-Prinzip aufgebaut ist, so daß, wenn die Anzahl von Gültigkeitsbereichen, für die die Parkeinheiten und/oder Bruchteile von Parkeinheiten gespeichert werden sollen, die Anzahl von Abteilen (64) überschreitet, die Schreibeinrichtungen (11), die Parkeinheiten und/oder Bruchteile von Parkeinheiten des Abteils (64), das dem Gültigkeitsbereich entspricht, in dem Speicher (60) unterdrücken, das:
- das erste in dem Speicher des Gehäuses vorhandene ist und/oder
- die kleinste Anzahl von gespeicherten Einheiten enthält und/oder
- die geringste Benutzungsfrequenz aufweist.

8. System gemäß Anspruch 7, dadurch gekennzeichnet, daß jedes der Abteile (64) durch einen Anzeiger des "Alters" (63) markiert ist, der in dem Verwaltungsspeicher (60) gespeichert ist, wobei der Wert des Anzeigers (63) repräsentativ für das Alter der letzten Benutzung des Abteils (64) relativ zu den anderen Abteilen (64) ist, und dadurch, daß im Falle einer Überzahl die Schreibeinrichtungen (11) das Abteil (64) unterdrücken, das von dem Anzeiger (63) betroffen ist, der repräsentativ für das höchste Alter ist.

## Claims

1. Accounting system for consumable units, notably an accounting system for parking time units, of the type comprising :
- a consumable card (25) or element comprising an electronic memory that stores a credit of consumable parking units, and
- a box (10) for the reception of said card (25) comprising, firstly, means (11) for the irreversible writing of the memory positions of the electronic memory of said card (25) and, secondly, a management memory (60), having a storage capacity limited to a predetermined maximal number of parking units and capable of collecting consumable parking units through said writing means, further comprising transfer means providing for the transfer of the balance of parking units contained in the card (25) towards said management memory (60) of the box when the arithmetical total of the number of added-up units of said card balance and of the current content of said management memory (60) of the box is smaller than or equal to said capacity of the management memory (60),
characterized in that, in order to allow the box to work equally for different areas of validity, the management memory (60) includes a predetermined number of distinct compartments (64) for storing parking units relating to an operation for a corresponding area of validity.

2. System according to claim 1, characterized in that said writing means effect said consumption of parking units as a function of preconfigurable parameters, which are further capable of stipulating the consumption of fractions of consumable parking units, and that the unconsumed fractions of parking units are stored in said management memory (60).

3. System according to claim 1 or 2, characterized in that said writing means (11) of the box (10) consume, on a priority basis, the parking units and/or fractions of parking units contained in said management memory (60), before consuming the parking units contained in said card.

4. System according to claim 2, characterized in that said preconfigurable parameters belong to the group comprising the following : elapsing of time, an area of validity of the card, a given zone among several zones divided out in said area of validity of the card.

5. System according to claim 4, characterized in that said preconfigured parameters include permanent data in the card, permanent data in the box and data programmable by the user.

6. System according to claim 1, characterized in that it comprises at least as many distinct types of cards as distinct areas of validity, each card containing a code representing its area of validity.

7. System according to claim 1 or 2, characterized in that said storage memory (60) with compartments (64) is set up in FIFO mode so that, when the number of areas of validity for which parking units and/or fractions of parking units that are to be stored exceeds the number of compartments (64) said writing means (11) eliminate from said memory (60) the parking units and/or fractions of parking units from the compartment (64) corresponding to the area of validity that :
- has had the most long-standing presence in the memory of the box, and/or
- comprises the smallest number of memorizes units, and/or
- has the lowest frequency of use.

8. System according to claim 7, characterized in that each of said compartments (64) is referenced by an indicator (63) of newness stored in the management memory (60), the value of the indicator (63) representing the oldness of the last use of the corresponding compartment (64) in relation to the other compartments (64) and in that, in the event of excess, the writing means (11) eliminate the compartment (64) assigned by the indicator (63) representing the greater degree of oldness.
